# EUROPÄISCHE PATENTSCHRIFT

(11) **EP 3 376 082 B1**
(45) Veröffentlichungstag und Bekanntmachung des Hinweises auf die Patenterteilung: **21.09.2022**
(21) Anmeldenummer: 17160839.1
(22) Anmeldetag: 14.03.2017
(51) Int. Cl.: F16K 31/04, F16K 11/074

(54) **VENTILEINRICHTUNG**
VALVE DEVICE
DISPOSITIF DE SOUPAPE

(43) Veröffentlichungstag der Anmeldung: 19.09.2018
(73) Patentinhaber: Grundfos Holding A/S, 8850 Bjerringbro (DK)
(72) Erfinder: BLAD, Thomas, 8850 Bjerringbro (DK); MØNSTER, Peter, 8900 Randers C (DK)
(74) Vertreter: Patentanwälte Vollmann Hemmer Lindfeld Partnerschaft mbB

(56) Entgegenhaltungen:
- EP-B1- 2 871 420
- DE-A1-102008 029 968
- DE-A1-102015 206 832
- KR-A- 20100 133 866
- US-A- 2 111 169

## Beschreibung

Die Erfindung betrifft eine Heizungsverteiler-Ventilbaugruppe, welche dazu vorgesehen ist einen flüssigen Wärmeträger wahlweise auf verschiedene Heizkreise zu verteilen und eine Mischeinrichtung aufweist, durch welche zwei Wärmeträgerströmungen unterschiedlicher Temperatur gemischt werden können, um eine gewünscht Vorlauftemperatur für den Wärmeträger, welcher den Heizkreisen zugeführt wird, einzustellen.

Es sind Baugruppen für derartige Heizungsverteiler bekannt, welche verschiedene Ventile zum Öffnen und Schließen der einzelnen Heizkreise und einen integrierten Mischer zum Einstellen der Temperatur aufweisen. Ein derartiger Heizungsverteiler ist beispielsweise aus EP 2871420 B1 bekannt. Dieser bekannte Heizungsverteiler benötigt für jeden Heizkreis zumindest ein Ventil und darüber hinaus noch zumindest ein Mischventil, welche jeweils einen Antrieb aufweisen und separat angesteuert werden müssen.

DE 10 2015 206 832 A1 offenbart ein Vierwegeventil für eine Heizungseinrichtung, welches das Umschalten zwischen zwei Eingängen ermöglicht und gleichzeitig ermöglicht, für jeden der beiden Eingänge die Strömung in einem einstellbaren Verhältnis auf zwei Ausgänge zu verteilen. Diese Vorrichtung dient dazu, eine zweite Wärmequelle in ein Heizungssystem einzubinden.

KR 2010-0133866 A offenbart eine Mischerarmatur, wie sie beispielsweise an Waschbecken verwendet wird, zum Einstellen der Temperatur des Wassers, welches einem Ausgang zugeführt wird. Derartige Armaturen sind nicht geeignet, in Heizungssystemen einen Wärmeträger auf verschiedene Heizkreise zu verteilen.

Es ist Aufgabe der Erfindung, eine Heizungsverteiler-Ventilbaugruppe mit vereinfachtem Aufbau zu schaffen, welche die Regulierung mehrerer Heizkreise und vorzugsweise gleichzeitig die Temperatureinstellung durch Mischung zweier Flüssigkeitsströmungen ermöglicht.

Diese Aufgabe wird gelöst durch eine Heizungsverteiler-Ventilbaugruppe mit den in Anspruch 1 angegebenen Merkmalen. Bevorzugte Ausführungsformen ergeben sich aus den Unteransprüchen, der nachfolgenden Beschreibung sowie den beigefügten Figuren.

Die erfindungsgemäße Heizungsverteiler-Ventilgruppe weist eine Verteilereinrichtung mit zumindest zwei Ausgängen auf, wobei die mehreren Ausgänge dafür vorgesehen sind, mit jeweils einem Heizkreis verbunden zu werden. Es können auch mehr als zwei Ausgänge, beispielsweise drei oder vier Ausgänge oder auch größere Anzahlen von Ausgängen, je nachdem wie viele Heizkreise angeschlossen werden sollen, vorgesehen sein. Die Verteilereinrichtung ist dazu ausgebildet, die Ausgänge zu öffnen und zu schließen, sodass einzelne Ausgänge gezielt geöffnet und geschlossen werden können und vorzugsweise darüber hinaus beliebige Kombinationen von Ausgängen auch gleichzeitig geöffnet werden können, um gegebenenfalls mehrere Heizkreise gleichzeitig zu versorgen. Damit kann eine Einzelraumregelung realisiert werden. Dabei ist erfindungsgemäß vorgesehen, dass die Verteilereinrichtung nur einen einzigen gemeinsamen Aktuator aufweist, welcher das Schließen und Öffnen der zumindest zwei Ausgänge bewirkt. Vorzugsweise werden mehrere und vorzugsweise alle Ausgänge durch einen gemeinsamen Aktuator reguliert, so dass eine Vielzahl von Ventilen eingespart werden kann. Das heißt über den gemeinsamen Aktuator kann der Öffnungszustand der zumindest zwei und vorzugsweise mehrerer oder aller Ausgänge verändert bzw. reguliert werden.

Die erfindungsgemäße Heizungsverteiler-Ventilbaugruppe vereint die Funktionalität eines Mischers bzw. eines Mischventils mit der Funktionalität mehrerer Heizkreis-Ventile zur Regulierung des Durchflusses bzw. zum Ein- und Ausschalten der einzelnen Heizkreise. Dazu weist die erfindungsgemäße Heizungsverteiler-Ventilbaugruppe zumindest zwei Eingänge auf, wobei ein Eingang mit einem Heizungsvorlauf verbunden wird, durch welchen ein erwärmter Wärmeträger, insbesondere erwärmtes Wasser zugeführt wird. Der zweite Eingang ist dafür vorgesehen, mit dem Heizungsrücklauf verbunden zu werden, sodass durch den zweiten Eingang Wärmeträger bzw. Wasser mit geringerer Temperatur zugeführt wird. Ferner weist die Heizungsverteiler-Ventilbaugruppe zumindest eine Mischeinrichtung auf, welche dazu ausgebildet ist die Strömungen aus den beiden Eingängen zu mischen. Dabei soll die Mischung mit variablem Mischungsverhältnis erfolgen. D. h. die Mischeinrichtung ist so ausgebildet, dass ein gewünschtes Mischungsverhältnis einstellt werden kann und das Mischungsverhältnis durch eine Stellvorrichtung bzw. ein verstellbares Ventilelement verändert werden kann, sodass die Ausgangstemperatur, welche durch Mischung der beiden Strömungen erreicht wird, verändert werden kann und/oder bei veränderlicher Eingangstemperatur auf einen konstanten Wert geregelt werden kann.

Es ist vorgesehen, dass die Mischeinrichtung und die Verteilereinrichtung einen gemeinsamen Aktuator bzw. einen gemeinsamen Antrieb zur Veränderung ihrer Einstellungen aufweisen. D. h. es ist ein gemeinsamer Antrieb vorgesehen, über welchen zum einen das Mischungsverhältnis in der Mischeinrichtung und zum anderen der Öffnungszustand der Ausgänge in der Verteilereinrichtung geändert werden kann. Durch eine solche Ausgestaltung sind erhebliche Einsparungen möglich, da nicht mehr verschiedene Antriebe bzw. Aktuatoren für jede einzelne Ventilfunktion bereitgestellt werden müssen. Auch die Ansteuerung der Mischeinrichtung und der Verteilereinrichtung wird dadurch vereinfacht, da lediglich ein Aktuator bzw. ein Antrieb angesteuert werden muss.

Die Heizungsverteiler/Ventilbaugruppe weist bevorzugt zumindest eine Strömungsverbindung zwischen den beiden Eingängen und den Ausgängen auf, sodass die Strömungen aus den beiden Eingängen gemischt und die so gemischte Strömung den Ausgängen zugeführt werden kann. Die Mischeinrichtung liegt dabei zweckmäßigerweise in dieser Strömungsverbindung zwischen den beiden Eingängen und den Ausgängen.

Gemäß einer bevorzugten Ausführungsform der Erfindung weisen die Mischeinrichtung und/oder die Verteilereinrichtung jeweils zumindest ein bewegliches Ventilelement auf, welche von einem gemeinsamen Aktuator bzw. Antrieb bewegbar ist. Dazu kann der gemeinsame Antrieb über geeignete Kupplungen mit dem oder den beweglichen Ventilelementen gekoppelt sein, sodass die beiden Ventilelemente von ein und demselben Aktuator angetrieben werden können. Wenn die erfindungsgemäße Heizungsverteiler-Ventilgruppe nur eine Verteilereinrichtung aufweist, werden mehrere und vorzugsweise alle Ausgänge vorzugsweise über ein Ventilelement reguliert. Wenn zusätzlich eine Mischeinrichtung vorgesehen ist, weist weiter bevorzugt die Mischeinrichtung ebenfalls ein bewegliches Ventilelement auf, über welches das Mischungsverhältnis eingestellt und verändert werden kann. Die beschriebenen Ventilelemente können um eine Drehachse drehbar sein. Dies ermöglicht eine Ausgestaltung des Ventilelementes in Form einer kreisförmigen Scheibe, wobei sich das Ventilelement auf der Scheibe drehbar ist, um zwischen verschiedenen Schaltstellungen bewegt zu werden.

Gemäß einer anderen bevorzugten Ausführungsform der Erfindung weisen die Mischeinrichtung und die Verteilereinrichtung zumindest ein gemeinsames Ventilelement auf, welches sowohl dem Öffnen und Schließen, d. h. der Einstellung des Öffnungszustandes der zumindest zwei Ausgänge, als auch der Veränderung des Mischungsverhältnisses in der Mischeinrichtung dient, wobei dieses zumindest eine gemeinsame Ventilelement durch den gemeinsamen Aktuator bzw. Antrieb bewegbar ist. Dies ermöglicht einen weiter vereinfachten Aufbau der Heizungsverteiler-Ventilbaugruppe, da lediglich ein anzutreibendes Ventilelement vorgesehen ist. Dieses Ventilelement ist so ausgestaltet, dass es verschiedene Ventilfunktionen übernehmen kann, insbesondere kann das Ventilelement dazu mit verschiedenen Schalt- bzw. Anschlussöffnungen zusammenwirken, um die gewünschten Schalt- und Mischfunktionen durch seine Bewegung verursachen zu können. Vorzugsweise ist das Ventilelement derart ausgebildet und von dem Aktuator derart antreibbar, dass es zur Veränderung des Mischungsverhältnisses eine erste Bewegung bzw. eine erste Bewegungsart und zu einer Veränderung eines Öffnungszustandes, d. h. der Öffnungs- und Schließstellungen der Ausgänge, eine zweite Bewegung bzw. eine zweite Bewegungsart ausführt. Dies ermöglicht es, das mit ein und demselben Ventilelement zwei verschiedene Funktionen, nämlich eine Änderung des Öffnungszustandes der Ausgänge und eine Änderung des Mischungsverhältnisses bewirkt werden kann. Bevorzugt ist auch das gemeinsame Ventilelement drehbar angeordnet und insbesondere als drehbare kreisförmige Scheibe ausgebildet, wie sie vorangehend beschrieben wurde.

Das Ventilelement kann dazu bevorzugt so ausgebildet und von dem Aktuator so antreibbar sein, dass die erste und die zweite Bewegung bzw. die erste und die zweite Bewegungsart in unterschiedliche Richtungen erfolgen und/oder unterschiedliche Weglängen haben. So kann beispielsweise durch Bewegung in einer ersten Bewegungsrichtung das Mischungsverhältnis und durch eine Bewegung in einer zweiten Bewegungsrichtung der Öffnungszustand der Ausgänge verändert werden. Alternativ ist es beispielsweise möglich durch eine lange Bewegung entlang einer großen Weglänge einen Schaltzustand in Bezug auf den Öffnungszustand der Ausgänge zu verändern und durch eine kleinere Verlagerung das Mischungsverhältnis zu verändern. Bevorzugt ist somit eine zweite Weglänge, um welche das Ventilelement zwischen zwei Schaltstellungen für die zweite Bewegung bzw. Bewegungsart zu bewegen ist, größer als eine erste Weglänge, um welche das Ventilelement für die erste Bewegung bzw. Bewegungsart zwischen zwei Endpositionen zur Veränderung des Mischungsverhältnisses zu bewegen ist, wobei vorzugsweise die erste Weglänge derart kürzer ist, dass die erste Bewegung nicht zu einer Veränderung der den Öffnungszustand der Ausgänge definierenden Schaltstellung führt. Dies kann beispielsweise dadurch erreicht werden, dass die Anschluss- und Schaltöffnungen, welche die Ausgänge freigeben oder schließen so groß ausgebildet sind, dass sie eine relative Bewegung zueinander zulassen, ohne den Durchgang bzw. freien Strömungsquerschnitt zu dem jeweiligen Ausgang wesentlich zu ändern. So ist es möglich das Ventilelement um ein gewisses Maß zu bewegen, ohne dass ein geöffneter Ausgang geschlossen wird. Diese Bewegung um ein gewisses Maß kann dazu benutzt werden an anderen Schalt- und Anschlussöffnungen eine derartige Verlagerung zu erreichen, dass ein Mischungsverhältnis geändert wird.

Vorzugsweise enden die zumindest zwei Ausgänge, vorzugsweise alle Ausgänge jeweils an einer Ausgangs-Anschlussöffnung. In dem Ventilelement sind gleichzeitig Ausgangs-Schaltöffnungen vorhanden, welche durch Bewegung des Ventilelementes durch den Aktuator in verschiedenen Schaltstellungen mit den Ausgangs-Anschlussöffnungen unterschiedlich zur Deckung bringbar sind. Indem die AusgangsSchaltöffnungen den Ausgangs-Anschlussöffnungen gegenüberliegend positioniert werden, können die Ausgangs-Anschlussöffnungen und damit die Ausgänge geöffnet werden.

Für den Fall, dass eine Mischeinrichtung vorgesehen ist, enden die beiden erforderlichen Eingänge vorzugsweise an jeweils einer Eingangs-Anschlussöffnung und in dem Ventilelement sind Eingangs-Schaltöffnungen vorhanden, welche durch Bewegung des Ventilelementes durch den Aktuator mit den Eingangs-Anschlussöffnungen unterschiedlich zur Deckung bringbar sind. Indem die Eingangs-Schaltöffnungen mit den Eingangs-Anschlussöffnungen unterschiedlich stark zur Deckung gebracht werden, ist es möglich den Strömungsquerschnitt durch die Eingangs-Anschlussöffnungen zu vergrößern oder zu verkleinern, wodurch das Mischungsverhältnis geändert werden kann.

Weiter bevorzugt enden die beiden Eingänge an jeweils einer Eingangs-Anschlussöffnung und/oder zumindest zwei Ausgänge, bevorzugt alle Ausgänge jeweils an einer Ausgangs-Anschlussöffnung, das Ventilelement weist Dichtflächen auf, welche durch Bewegung des Ventilelementes durch den gemeinsamen Aktuator mit den Eingangs-Anschlussöffnungen und den Ausgangs-Anschlussöffnungen unterschiedlich zur Deckung bringbar sind. Die Dichtflächen dienen somit dazu die Eingangs-Anschlussöffnungen und/oder die Ausgangs-Anschlussöffnungen ganz oder teilweise zu verschließen, je nachdem ob der Strömungsdurchgang ganz geschlossen werden soll oder nur der Strömungsquerschnitt zum Einstellen eines Mischungsverhältnisses verkleinert oder vergrößert werden soll. Die Dichtflächen wirken somit mit den vorangehend beschriebenen Schaltöffnungen zusammen. Die Anschlussöffnungen sind entweder durch eine Schaltöffnung geöffnet oder durch eine Dichtfläche geschlossen oder sie können teilweise geöffnet sein, indem sie gleichzeitig von einer Dichtfläche und einer Schaltöffnung überdeckt werden.

Das Ventilelement weist vorzugsweise zumindest eine Ausgangs-Schaltöffnung auf, welche so ausgebildet ist, dass sie abhängig von einer Schaltstellung des Ventilelementes die Ausgangs-Anschlussöffnungen unterschiedlich überdeckt. Die zumindest eine Ausgangs-Schaltöffnung kann beispielsweise mit verschiedenen Ausgangs-Anschlussöffnungen zur Deckung gebracht werden, um einzelne Ausgänge wahlweise zu öffnen. Es ist jedoch auch möglich, dass das Ventilelement verschiedene Gruppen von Ausgangs-Schaltöffnungen aufweist, beispielsweise zumindest zwei Gruppen von AusgangsSchaltöffnungen. Diese Gruppen von Ausgangs-Schaltöffnungen sind vorzugsweise so ausgebildet und angeordnet, dass in einer ersten Schaltstellung zumindest eine Ausgangs-Schaltöffnung aus einer ersten Gruppe eine Ausgangs-Anschlussöffnung überdeckt und in einer zweiten Schaltstellung eine oder mehrere Ausgangs-Schaltöffnungen aus einer zweiten Gruppe eine oder mehrere Ausgangs-Anschlussöffnungen überdeckt. So kann beispielsweise in einer ersten gruppe von Ausgangsschaltöffnungen lediglich eine Ausgangsschaltöffnung vorgesehen sein, welche wahlweise mit einer der Ausgangs-Anschlussöffnungen zur Deckung gebracht wird, um lediglich einen Ausgang zu öffnen. In einer zweiten Gruppe von AusgangsSchaltöffnungen können beispielsweise zwei Schaltöffnungen so gelegen sein, dass sie gleichzeitig mit zwei Ausgangs-Anschlussöffnungen zur Deckung gebracht werden können, sodass zwei Ausgänge gleichzeitig geöffnet werden können. Auf diese Weise kann eine solche Anzahl von Gruppen von Ausgangs-Schaltöffnungen vorgesehen sein, dass allein durch Verlagerung des Ventilelementes jeder einzelne Ausgang und darüber hinaus vorzugsweise beliebige Kombinationen von Ausgängen gleichzeitig geöffnet werden können. Auf diese Weise kann eine solche Anzahl von Gruppen von Ausgangs-Schaltöffnungen vorgesehen sein, dass allein durch Verlagerung des Ventilelementes jeder einzelne Ausgang und darüber hinaus vorzugsweise beliebige Kombinationen von Ausgängen gleichzeitig geöffnet werden können.

Weiter bevorzugt weist das Ventilelement zumindest eine Eingangs-Schaltöffnung auf, welche so ausgebildet ist, dass sie abhängig von einer Positionierung des Ventilelementes die Eingangs-Anschlussöffnungen unterschiedlich überdeckt, wobei vorzugsweise dazu eine Veränderung der Positionierung innerhalb einer Schaltstellung, durch welche der Öffnungszustand der Ausgänge definiert wird, möglich ist. D. h. durch die Veränderung der Positionierung des Ventilelementes zur Änderung der Überdeckung der Eingangs-Schaltöffnung bzw. Eingangs-Schaltöffnungen mit den Eingangs-Anschlussöffnungen wird vorzugsweise nicht die Überdeckung der AusgangsSchaltöffnungen mit den Ausgangs-Anschlussöffnungen verändert. D. h. hier können die Bewegungen, welche zur Veränderung des Mischungsverhältnisses sind und die Bewegungen, welche zur Veränderung der Schaltstellungen der Verteilereinrichtung zur Veränderung des Öffnungszustandes der Ausgänge erforderlich sind, einander überlagert werden. So kann beispielsweise der Öffnungszustand der Ausgänge in großen Bewegungsschritten des Ventilelementes verändert werden, wobei die Größe der dafür erforderlichen Schaltöffnungen und Anschlussöffnungen in der Bewegungsrichtung des Ventilelementes so ist, dass deren Überdeckung oder Nichtüberdeckung auch erhalten bleibt, wenn das Ventilelement in einer überlagerten Bewegung um ein kleineres Maß bewegt wird, um die Eingangs-Schaltöffnungen und Eingangs-Anschlussöffnungen in ihrer Überlappung zur Veränderung des Mischungsverhältnisses zu verändern. Dies bedeutet, dass die Bewegung zur Veränderung des Mischungsverhältnisses der Bewegung zur Veränderung der Schaltstellungen als kleinere Bewegungen überlagert sind.

Der gemeinsame Aktuator ist vorzugsweise ein Elektromotor und insbesondere ein Schrittmotor, durch welchen das Ventilelement in eine gewünschte Position bzw. Schaltstellung bewegt werden kann.

Die Heizungsverteiler-Ventilbaugruppe weist ein Umwälzpumpenaggregat zur Förderung eines Wärmeträgers durch die zumindest zwei Ausgänge auf. D. h. das Umwälzpumpenaggregat ist in die Heizungsverteiler-Ventilbaugruppe integriert, wobei die Heizungsverteiler-Ventilbaugruppe besonders bevorzugt in ein Pumpengehäuse des Umwälzpumpenaggregates integriert sein kann, sodass dieses ein kombiniertes Pumpen- und Ventilgehäuse aufweist. In einer solchen Ausgestaltung ist es darüber hinaus gemäß einer weiteren bevorzugten Ausführungsform möglich, als Aktuator für die Heizungsverteiler-Ventilbaugruppe den Antriebsmotor des Umwälzpumpenaggregates zu nutzen, indem das Ventilelement mit diesem Antriebsmotor mechanisch, magnetisch und/oder hydraulisch gekoppelt wird, wozu eine lösbare Kupplung vorgesehen sein kann, welches ermöglicht, die Kopplung nach Erreichen einer gewünschten Schaltstellung bzw. Positionierung des Ventilelements aufzuheben und in den normalen Förderbetrieb des Pumpenaggregates überzugehen.

Nachfolgend wird die Erfindung beispielhaft anhand der beigefügten Figuren beschrieben. In diesen zeigt:
- Fig. 1: eine perspektivische Explosionsansicht einer Heizungsverteiler-Ventilbaugruppe gemäß einer ersten Ausführungsform der Erfindung,
- Fig. 2: eine perspektivische Explosionsansicht gemäß Fig. 1 aus einer anderen Blickrichtung,
- Fig. 3: eine Schnittansicht des Heizungsverteiler-Ventilbaugruppe gemäß Fig. 1 und 2,
- Fig. 4: eine Draufsicht auf die Unterseite des Heizungsverteiler-Ventilbaugruppe gemäß Fig. 1 und 3,
- Fig.5 bis 5c: Draufsichten auf das geöffnete Ventilgehäuse mit geöffnetem Ventilelement für drei verschiedene Schaltstellungen, in welchen jeweils ein Ausgang geöffnet ist,
- Fig. 6a bis 6c: Ansichten entsprechend Fig. 5a bis 5c für drei verschiedene Schaltstellungen, in welchen jeweils zwei Ausgänge geöffnet sind,
- Fig. 7 a bis 7c: Ansichten gemäß Fig. 5 und 6 für eine Schaltstellung, bei welcher drei Ausgänge geöffnet sind mit drei unterschiedlichen Positionierungen des Ventilelementes,
- Fig. 8: einen schematischen hydraulischen Schaltplan für eine Heizungsanlage mit einer Heizungsverteiler-Ventilbaugruppe gemäß Fig. 1-7,
- Fig. 9: eine Schnittansicht einer Heizungsverteiler-Ventilbaugruppe gemäß einer zweiten Ausführungsform der Erfindung,
- Fig. 10: eine Draufsicht auf das geöffnete Ventilgehäuse mit einem geöffneten Ventilelement gemäß einer dritten Ausführungsform der Erfindung,
- Fig. 11a bis 11e: Ansichten entsprechend Fig. 10 für verschiedene Schaltstellungen, und
- Fig. 12: eine Draufsicht auf das Ventilelement gemäß Fig. 10 und 11.

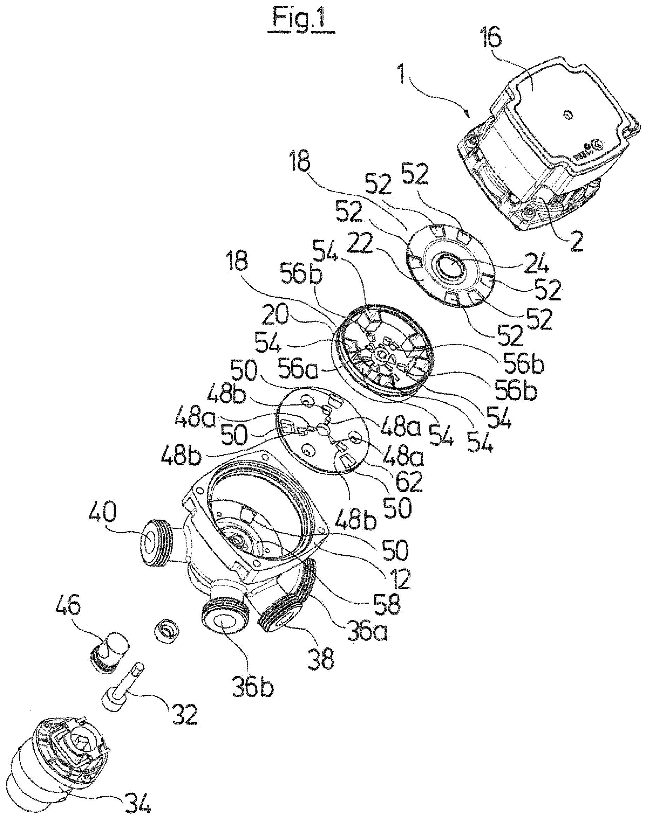

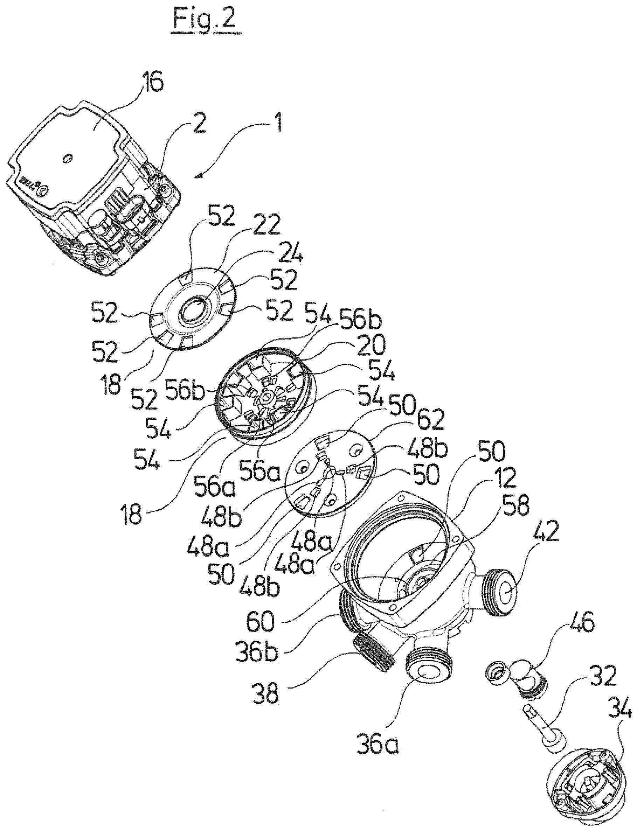

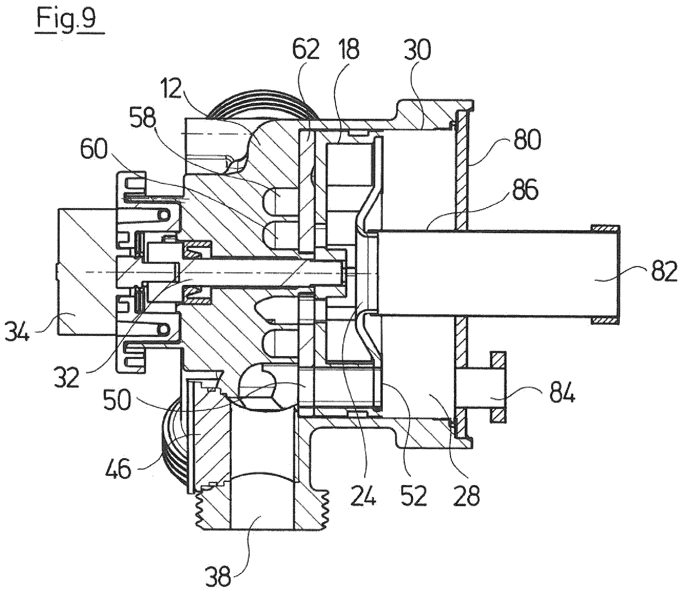

Die erfindungsgemäße Heizungsverteiler-Ventilbaugruppe, wie sie als erstes Ausführungsbeispiel anhand der Figuren 1 bis 8 beschrieben wird, stellt eine Kombination eines Pumpenaggregates in Form eines Kreiselpumpenaggregates mit einer Ventileinrichtung dar. Das zweite Ausführungsbeispiel gemäß Fig. 9 zeigt eine Heizungsverteiler-Ventilbaugruppe ohne Umwälzpumpenaggregat.

Das Kreiselpumpenaggregat bzw. Pumpenaggregat 1 weist ein Stator- bzw. Motorgehäuse 2 auf, in welchem ein elektrischer Antriebsmotor mit einem Stator 4 und einem Rotor 6 angeordnet ist. Der Rotor 6 ist drehfest auf einer Rotorwelle 8 angeordnet. Der gezeigte elektrische Antriebsmotor ist als nasslaufender elektrischer Antriebsmotor mit einem Spalttopf bzw. Spaltrohr 10 ausgebildet, welches den Statorraum mit dem Stator 4 von dem Rotorraum mit dem darin angeordneten Rotor 6 trennt, so dass der Rotor 6 in der zu fördernden Flüssigkeit rotiert. Das Motorgehäuse 2 ist mit einem Ventilgehäuse 12 verbunden, welches gleichzeitig ein Pumpengehäuse bildet. In dem Ventil- bzw. Pumpengehäuse 12 rotiert ein drehfest mit der Rotorwelle 8 verbundenes Laufrad 14.

An dem dem Ventilgehäuse 12 abgewandten Axialende in Richtung der Drehachse X ist ein Elektronikgehäuse 16 mit einer darin angeordneten Steuereinrichtung 17 angeordnet. Die Steuereinrichtung 17 dient insbesondere der Steuerung bzw. Regelung des elektrischen Antriebsmotors, wobei der elektrische Antriebsmotor insbesondere in seiner Drehzahl veränderbar ist, wozu die Steuereinrichtung 17 einen Frequenzumrichter aufweisen kann. Es ist zu verstehen, dass das Elektronikgehäuse 16 nicht zwingend am Axialende des Motorgehäuses 2 angeordnet werden muss, sondern auch an einer anderen Position angeordnet werden könnte.

In dem Ventilgehäuse 12 ist neben dem Laufrad 14 ein Ventilelement 18 angeordnet. Das Ventilelement 18 ist trommelförmig ausgebildet mit einem topfförmigen Unterteil 20 und einem das Unterteil 20 an seiner dem Laufrad 14 zugewandten Stirnseite verschließenden Deckel 22. Der Deckel 22 weist eine zentrale Saugöffnung 24 auf, welche mit dem Saugmund 26 des Laufrades 14 in Eingriff ist, wobei in diesem Ausführungsbeispiel ein axial vorstehender Kragen der Saugöffnung 24 in das Innere des Saugmundes 26 eingreift. Der die Saugöffnung 24 umgebende Bereich des Deckels 22 bildet eine Druckfläche, welche dem Druckraum 28 im Umgebungsbereich des Laufrades 14 zugewandt ist. Der Druckraum 28 ist derjenige Druckraum, in welchen die Flüssigkeit aus dem Laufrad 14 austritt, das heißt der Raum ausgangsseitig des Laufrades 14, in welchem ein höherer Druck als an der Saugseite herrscht. Das Ventilelement 18 ist somit sowohl mit der Saugseite im Bereich der Saugöffnung 24 in Verbindung als auch mit der Druckseite am Druckraum 28 über die von dem Deckel 22 gebildete Druckfläche.

Das Laufrad 14 ist geschlossen ausgebildet, das heißt es ist an seiner dem Ventilelement 18 zugewandten Seite im Umgebungsbereich des Saugmundes 26 von einer ringförmigen Deckscheibe 30 verschlossen. Die Deckscheibe 30 sorgt für eine Trennung zwischen Saug- und Druckbereich am Laufrad 14.

Das Ventilelement 18 ist auf einer Welle 32 drehfest angeordnet, wobei es sich um ein gewisses Maß in axialer Richtung X auf der Welle 32 bewegen kann. Die Welle 32 ist mit einem Verstellmotor 34 verbunden, welcher vorzugsweise als Schrittmotor mit Untersetzungsgetriebe ausbildet ist. Der Verstellmotor 34 wird ebenfalls von der Steuereinrichtung 17 angesteuert.

Das Ventilgehäuse 12 weist in diesem Ausführungsbeispiel zwei Sauganschlüsse 36a und 36b auf. Ferner sind am Ventilgehäuse 12 drei Druckanschlüsse 38, 40 und 42 angeordnet, welche im Inneren des Pumpengehäuses 12 in drei jeweils um 120° versetzt zueinander angeordnete druckseitige Anschlussöffnungen 50 münden. Der Sauganschluss 36a steht im Boden des Pumpenaggregates 12 in Verbindung mit einer äußeren Ringöffnung 58, während der Sauganschluss 36b in Verbindung mit einer inneren Ringöffnung 60 steht. Im Boden des Pumpengehäuses 12 ist in dieser Ausführungsform eine Steuerscheibe 62 angeordnet, welche in einer festen Winkelposition liegt, so dass Öffnungen, welche die druckseitigen Anschlussöffnungen 50 bilden, den druckseitigen Anschlussöffnungen 50 im Boden des Pumpengehäuses 12 gegenüberliegen. Darüber hinaus sind in der Steuerscheibe radial innenliegend drei saugseitige Anschlussöffnungen 48a angeordnet, welche in Verbindung mit dem Sauganschluss 36a stehen, indem sie der inneren Ringöffnung 60 gegenüberliegen. Radial weiter außenliegend, der äußeren Ringöffnung 58 gegenüberliegend, sind drei saugseitige Anschlussöffnungen 48b an drei gleichmäßig über den Umfang verteilte Winkelpositionen angeordnet. Diese saugseitigen Anschlussöffnungen 48b sind in Verbindung mit dem Sauganschluss 36b.

Das Ventilelement 18 weist in seinem Inneren mehrere, in diesem Fall sechs, Verbindungen auf, welche sich parallel zur Drehachse X von jeweils einer Drucköffnung 52 zu einer druckseitigen Schaltöffnung 54 an der entgegengesetzten, d. h. dem Laufrad 14 abgewandten Stirnseite des Ventilelements 18 erstrecken. In der dem Laufrad abgewandten axialen Stirnseite des Ventilelementes 18, d. h. im Boden des Unterteils 20. Darüber hinaus sind ferner saugseitige Schaltöffnungen 56a und 56b angeordnet, wobei die saugseitigen Schaltöffnungen 56a radial innen liegend an einer radialen Position liegen, welche der Positionierung der saugseitigen Anschlussöffnungen 48a entspricht. Die saugseitigen Schaltöffnungen 56b sind radial weiter außen liegend in einem Ringbereich angeordnet, welcher einem Ringbereich gegenüberliegt, in welchem die saugseitigen Anschlussöffnungen 48b gelegen sind. In diesen Beispielen sind die druckseitigen Schaltöffnungen in einem Raster von 20°-Schritten angeordnet, so dass sich zwischen den Schaltstellungen Winkelschritte von 20° oder einem Vielfachen von 20° ergeben.

Die saugseitigen Schaltöffnungen 56 sind zum Innenraum des Ventilelementes 18 hin geöffnet und in fluidleitender Verbindung zu der Saugöffnung 24. Die Verbindungen zwischen den druckseitigen Schaltöffnungen 54 und den Drucköffnungen 52 sind durch Wandungen vom übrigen Innenraum des Ventilelementes 18 getrennt, so dass in axialer Richtung durch das Ventilelement zum einen druckseitige Verbindungen zwischen den Drucköffnungen 52 und den druckseitigen Schaltöffnungen 54 sowie eine saugseitige Verbindung von den saugseitigen Schaltöffnungen 56 zu der Saugöffnung 54 bestehen.

Die druckseitigen Schaltöffnungen 54 sind am Boden des Ventilelementes 18 so angeordnet, dass sie von der Drehachse X genau so weit beabstandet sind, wie die druckseitigen Anschlussöffnungen 50 im Boden des Pumpengehäuses 12. Das heißt die druckseitigen Anschlussöffnungen 50 liegen auf einem Ringbereich derart, dass sie einem Ringbereich, in dem die druckseitigen Schaltöffnungen 54 angeordnet sind, gegenüberliegen. Ferner sind die druckseitigen Schaltöffnungen 54 und die druckseitigen Anschlussöffnungen 50 zueinander passend dimensioniert, so dass sie durch entsprechende Drehung des Ventilelementes 18 zur Deckung gebracht werden können.

Die saugseitigen Schaltöffnungen 56 liegen der ringförmigen saugseitigen Anschlussöffnung 48 gegenüber, so dass stets eine Verbindung vom Sauganschluss 36 zu den saugseitigen Schaltöffnungen 56 und darüber zur Saugöffnung 34 besteht.

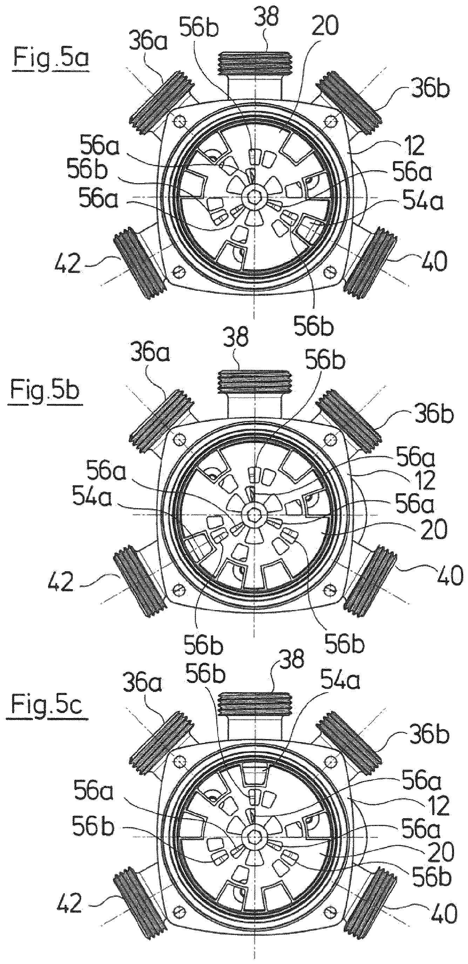

Anhand der Fig. 5a bis 5c werden drei Schaltstellungen gezeigt, in denen jeweils einer der Druckanschlüsse 38, 40 und 42 geöffnet ist. In Fig. 5a ist der Druckanschluss 40 geöffnet, indem die druckseitige Schaltöffnung 54a einer druckseitigen Anschlussöffnung 50, welche mit dem Druckanschluss 40 verbunden ist, gegenüberliegt. Die druckseitige Schaltöffnung 54a ist im Boden des Unterteils 20 des Ventilelementes 18 so gelegen, dass ausgehend von der druckseitigen Schaltöffnung 54a um jeweils 120° beabstandet keine Schaltöffnungen vorgesehen sind, so dass in dieser Ventilstellung bzw. Schaltstellung die anderen beiden druckseitigen Anschlussöffnungen 50 von dem Boden des Unterteils 20 überdeckt und damit verschlossen sind. In der Schaltstellung gemäß Fig. 5b ist das Ventilelement 18 um 120° gedreht, so dass die druckseitige Schaltöffnung 54a der Drucköffnung, welche mit dem Druckanschluss 42 verbunden ist, gegenüberliegt. Fig. 5c zeigt eine dritte Schaltstellung, in welcher das Ventilelement 18 nochmals um 180° um die Drehachse X gedreht ist, so dass die druckseitige Schaltöffnung 54a der druckseitigen Anschlussöffnung 50, welche mit dem Druckanschluss 38 verbunden ist, gegenüberliegt. In jeder dieser drei genannten Schaltstellungen kann das Ventilelement 18 darüber hinaus geringfügig um einen kleinen Winkelbereich (z.B. +/- 5°) in seiner Position verändert werden, so dass die gegenüberliegenden saugseitigen Anschlussöffnungen 48a in ihrer Überdeckung geringfügig verändert werden, so dass der Durchfluss vergrößert oder verkleinert werden kann. Gleichzeitig werden die saugseitigen Schaltöffnungen 56b in ihrer Überdeckung mit den saugseitigen Anschlussöffnungen 48b variiert, so dass auch hier der Durchfluss verändert werden kann. Dabei erfolgt die Veränderung der Überdeckung so, dass dann, wenn der freie Querschnitt der saugseitigen Anschlussöffnungen 48a vergrößert wird, gleichzeitig der freie Querschnitt der saugseitigen Anschlussöffnungen 48b verkleinert wird. Auf diese Weise kann das Mischungsverhältnis der durch die saugseitigen Anschlussöffnungen 48a und 48b fließenden Strömungen verändert werden. Es ist zu erkennen, dass in allen drei in Fig. 5a, Fig. 5b und Fig. 5c gezeigten Schaltstellungen ein solches Mischen durch geringfügige Veränderung der Positionierung innerhalb der Schaltstellung möglich ist. Wenn die Schaltstellung durch Drehen um 120° geändert wird, verbleibt das Mischungsverhältnis jedoch gleich, da durch die Anordnung der saugseitigen Schaltöffnungen 56 der Überdeckungsgrad mit den saugseitigen Anschlussöffnungen 48a und 48b nicht geändert wird.

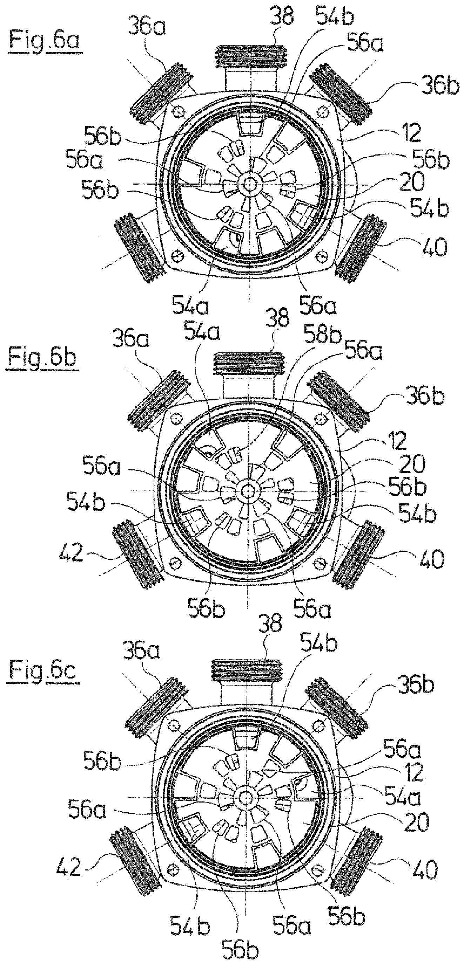

In den drei weiteren Schaltstellungen, welche gemäß Fig. 6a, Fig. 6b und Fig. 6c beschrieben werden, sind jeweils zwei der drei Druckanschlüsse 38, 40 und 42 geöffnet. Dazu kommen zwei weitere druckseitige Schaltöffnungen 54b im Boden des Unterteils 20 des Ventilelementes 18 zum Einsatz. Diese beiden Schaltöffnungen 54b sind um 120° zueinander beabstandet, wobei an der dritten zugehörigen um 120° beabstandeten Position keine Schaltöffnung vorgesehen ist, so dass jeweils eine der druckseitigen Anschlussöffnungen 50 überdeckt und verschlossen ist. In der Schaltstellung gemäß Fig. 6a überdecken die beiden druckseitigen Schaltöffnungen 54b die druckseitigen Anschlussöffnungen 50 der Druckanschlüsse 38 und 40. In der Schaltstellung gemäß Fig. 6b ist das Ventilelement 18' um 120° gedreht, so dass in entsprechender Weise die Druckanschlüsse 40 und 42 geöffnet sind, indem die Schaltöffnungen 54b die zugehörigen Anschlussöffnungen 50 überdecken. Die dritte mögliche Schaltstellung ist in Fig. 6c gezeigt, dort sind die Druckanschlüsse 38 und 42 gleichzeitig geöffnet, während der dritte Druckanschluss 40 geschlossen ist. Auch in diesen drei Schaltstellungen kann das Mischungsverhältnis der Strömungen aus den beiden Sauganschlüssen 36a und 36b durch geringfügige Veränderung der Winkelposition um die erreichte Schaltstellung verändert werden, indem die saugseitigen Anschlussöffnungen 48a und 48b mit den saugseitigen Schaltöffnungen 56a und 56b unterschiedlich in Überdeckung gebracht werden. Die Veränderung der Positionierung ist in ihrem Winkel dabei deutlich kleiner als die Veränderung der Schaltstellung.

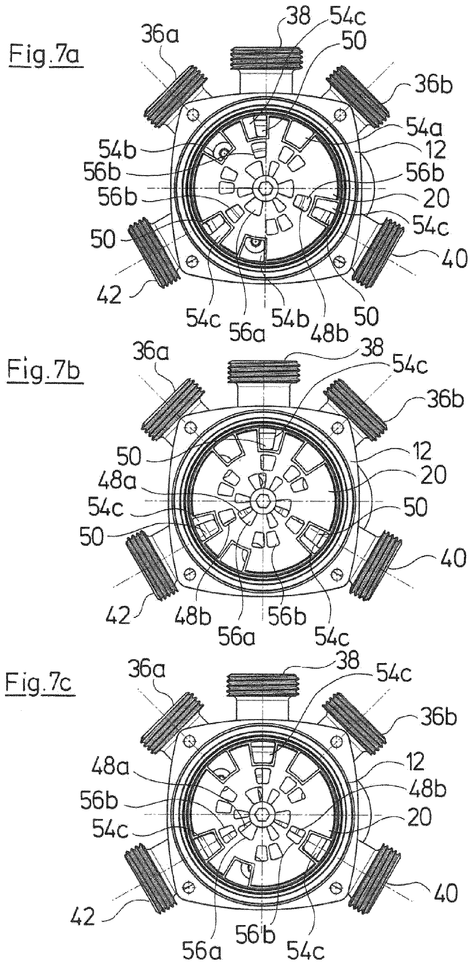

Anhand von Fig. 7a bis 7c wird eine weitere mögliche Schaltstellung beschrieben, in welcher alle drei Druckanschlüsse 38, 40, 42 geöffnet sind. Dazu kommen drei druckseitige Schaltöffnungen 54c im Boden des Unterteils 20 des Ventilelementes 18' zum Einsatz, welche um 120° beabstandet zueinander angeordnet sind. Die zuvor beschriebenen druckseitigen Schaltöffnungen 54 sind in dieser Schaltstellung so plaziert, dass sie keiner der druckseitigen Anschlussöffnungen 50 gegenüberliegen, wie in Fig. 14a gekennzeichnet. In der Schaltstellung gemäß Fig. 7a bis 7c liegen die druckseitigen Schaltöffnungen 54c jeweils einer der drei druckseitigen Anschlussöffnungen 50 gegenüber, wobei sich diese zumindest teilweise überlappen. Fig. 7c zeigt genau die Mitte der Schaltstellung, in welcher die Schaltöffnungen 54c die druckseitigen Anschlussöffnungen 50 genau überdecken. Die Fig. 7a und 7b zeigen davon in zwei entgegengesetzte Drehrichtungen geringfügig abweichende Positionierungen, in welchen das Mischungsverhältnis an der Saugseite in der zuvor gehend beschriebenen Weise geändert wird. In diesen Positionen überlappen sich die druckseitigen Schaltöffnungen 54c mit den druckseitigen Anschlussöffnungen 50 lediglich teilweise. In der ersten Positionierung gemäß Fig. 7a überdecken sich lediglich die saugseitigen Schaltöffnungen 56b mit den gegenüberliegenden saugseitigen Anschlussöffnungen 48b. Die saugseitigen Anschlussöffnungen 48a, welche radial innen liegen, sind hingegen vollständig geschlossen. In dieser Position wird Flüssigkeit lediglich aus dem Sauganschluss 36b angesaugt. Die Positionierungen gemäß Fig. 7b und Fig. 7c ergeben unterschiedliche Überlappungen der Anschlussöffnungen 48a und 48b mit den saugseitigen Schaltöffnungen 56a und 56b, welche unterschiedliche Mischungsverhältnisse repräsentieren, gezeigt.

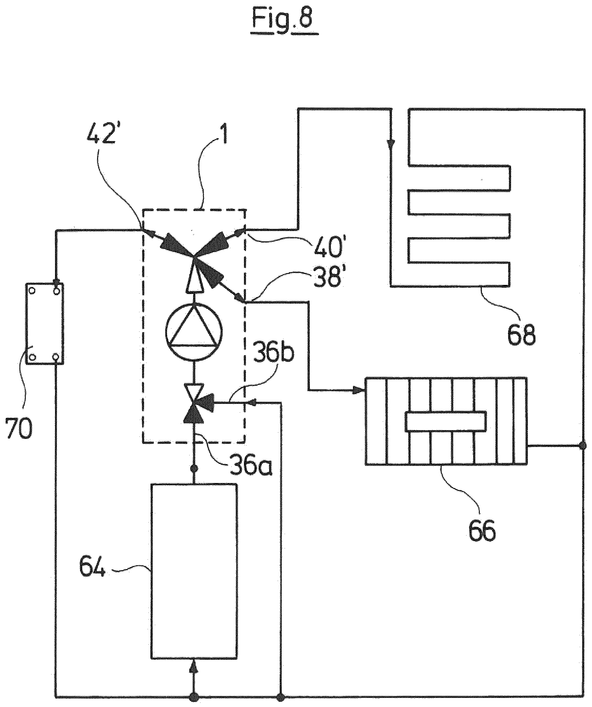

Ein Pumpenaggregat 1, wie es vorangehend beschrieben wurde, kann beispielsweise in einer Heizungsanlage zum Einsatz kommen, welche in Fig. 8 gezeigt ist. Die Heizungsanlage weist eine Wärmequelle 64 auf, welche beispielsweise ein Gasheizkessel sein kann. Darüber hinaus gibt es zwei Heizkreise 66 und 68, von welchen der Heizkreis 68 ein Fußbodenheizungskreis ist, welcher mit geringerer Temperatur betrieben wird. Ferner ist noch ein Sekundärwärmetauscher 70 zum Erwärmen von Brauchwasser vorgesehen. Der erste Sauganschluss 36a des Pumpenaggregates 1 ist mit dem Ausgang der Wärmequelle 64 verbunden. Der zweite Sauganschluss 36b ist mit dem Rücklauf der Heizkreise 66, 68 und des Sekundärwärmetauschers 70 verbunden und führt somit dem Sauganschluss 36b abgekühltes Wasser zu, während dem Sauganschluss 36a erwärmtes Wasser zugeführt wird. In der beschriebenen Weise können diese beiden Flüssigkeitsströme gemischt werden. An den Druckanschluss 38 ist der erste Heizkreis 66, an den Druckanschluss 40 der zweite Heizkreis 68 und den Druckanschluss 42 der Sekundärwärmetauscher 70 angeschlossen. Es kann somit zwischen diesen drei Heizkreisen umgeschaltet werden, wobei in der beschriebenen Weise auch zwei oder alle drei parallel betrieben werden können. Gleichzeitig ist eine Temperaturanpassung durch die Mischung möglich.

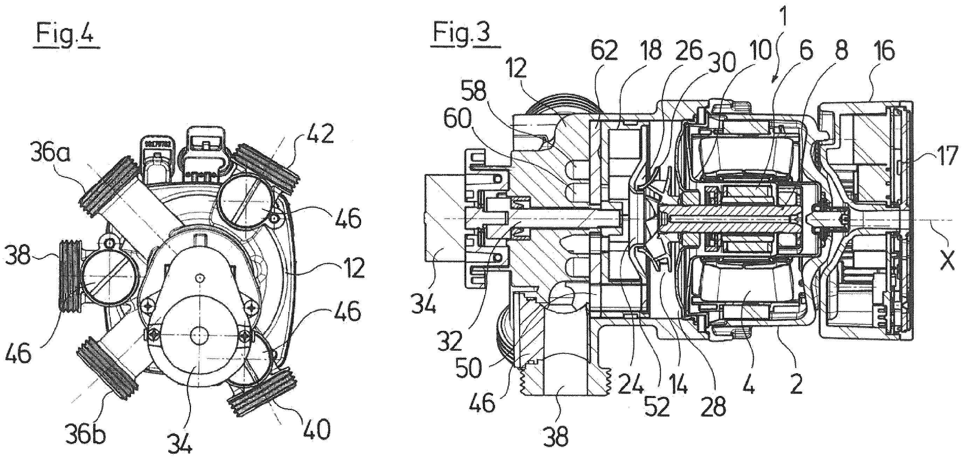

Fig. 9 zeigt eine zweite Ausführungsform der Heizungsverteiler-Ventilbaugruppe unabhängig von einem Pumpenaggregat. Die Darstellung entspricht im Wesentlichen Fig. 3, nur dass das Pumpenaggregat entfällt. Stattdessen ist das Ventilgehäuse 12 durch einen Deckel 80 verschlossen, welcher mit einem Sauganschluss 82 und einem Druckanschluss 84 versehen ist. Der Sauganschluss 82 weist einen Saugstutzen 86 auf, welcher mit der Saugöffnung 24 in gleicher Weise in Eingriff ist wie in dem ersten Beispiel der Saugmund 26. Der Saugstutzen 84 mündet in den Druckraum 28. Eine solche Heizungsverteiler-Ventilbaugruppe ermöglicht dieselben Schaltfunktionen, wie sie vorangehend beschrieben wurde, kann jedoch unabhängig von einem Umwälzpumpenaggregat und insbesondere beabstandet von diesem eingesetzt bzw. montiert werden, wobei zu verstehen ist, dass der Sauganschluss 82 und der Druckanschluss 84 auch in andere Richtungen gerichtet sein könnten.

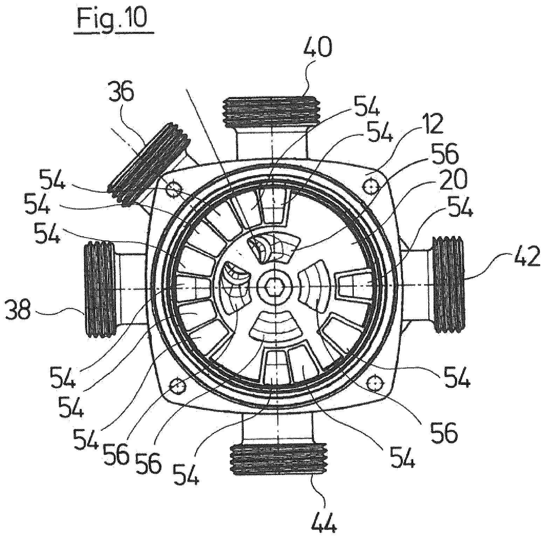

Die Fig. 10 bis 12 zeigen eine Variante der Ausführungsform gemäß Fig. 1 bis 7, bei welcher die Heizungsverteiler-Ventilbaugruppe keine Mischeinrichtung aufweist, sondern lediglich eine Verteilereinrichtung, welche in diesem Ausführungsbeispiel vier Ausgänge 38, 40, 42 und 44 versorgen und regulieren kann. Diese Funktion kann für eine Einzelraumregelung genutzt werden. Das in Fig. 10 gezeigte Ventilgehäuse 12 weist lediglich einen Eingang bzw. Sauganschluss 36 und vier Ausgänge 38, 40, 42 und 44 auf. Die vier Ausgänge 38, 40, 42 und 44 enden in vier um 90° zueinander versetzten druckseitigen Anschlussöffnungen 50. Der Sauganschluss 36 mündet in einer einzigen zentralen ringförmigen Anschlussöffnung 48, welcher die saugseitigen Schaltöffnungen 56 in dem Ventilelement 18 bzw. dem Unterteil 20 des Ventilelementes 18 gegenüberliegen, so dass stets eine Verbindung von dem Sauganschluss 38 zu den saugseitigen Schaltöffnungen 56 und darüber zu der beschriebenen Saugöffnung 24 besteht.

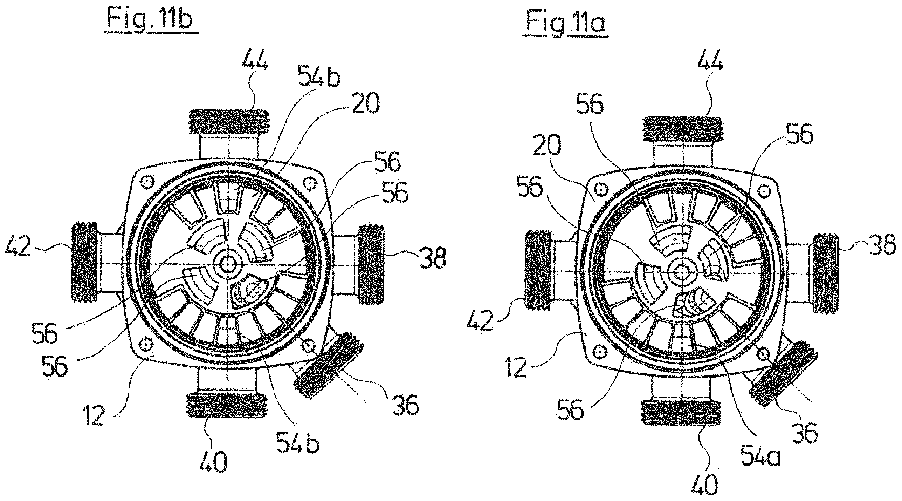

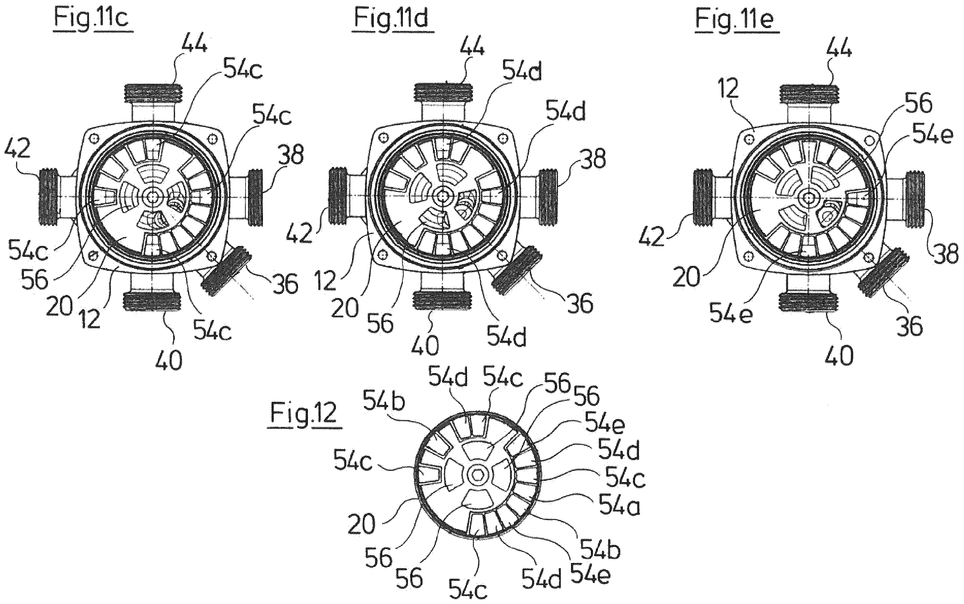

Anhand der Fig. 11a bis 11e und Fig. 12 werden nun fünf verschiedene Schaltstellungen erläutert. Fig.1 1a zeigt eine erste Schaltstellung, in welcher lediglich der Druckanschluss 40 geöffnet ist bzw. mit dem Druckraum 28 verbunden ist. Dazu ist das Ventilelement 18 so gedreht, dass die druckseitige Schaltöffnung 54a deckungsgleich zu der druckseitigen Anschlussöffnung 50 liegt, welche mit dem Druckanschluss 40 verbunden ist. Alle übrigen druckseitigen Schaltöffnungen 54 im Unterteil 20 des Ventilelementes 18 liegen hingegen den Bodenbereichen des Pumpengehäuses 12 gegenüber. Insbesondere werden die übrigen druckseitigen Anschlussöffnungen 50 durch den Boden des Unterteils 20 überdeckt und verschlossen. Die saugseitigen Schaltöffnungen 56 sind in Verbindung mit der saugseitigen Anschlussöffnung 48, so dass in dieser Schaltstellung das Laufrad 14 Flüssigkeit durch den Sauganschluss 36 hin zu dem Druckanschluss 40 fördert. In der zweiten Schaltstellung gemäß Fig. 11b sind zwei druckseitige Schaltöffnungen 54b, welche diametral entgegengesetzt zueinander angeordnet sind, deckungsgleich zu den druckseitigen Anschlussöffnungen 50 der Druckanschlüsse 40 und 44 gelegen, so dass das Pumpenaggregat vom Sauganschluss 36 in die geöffneten Ausgänge 40 und 44 fördert. Durch Drehung des Ventilelementes 18 um 90° könnte in gleicher Weise eine Verbindung zu den Ausgängen 38 und 42 hergestellt werden, indem die druckseitigen Schaltöffnungen 54b zur Deckung mit den druckseitigen Anschlussöffnungen 50 der Druckanschlüsse 38 und 42 gebracht werden. In der dritten Schaltstellung, welche in Fig. 11c gezeigt ist, sind alle vier Druckanschlüsse 38, 40, 42 und 44 geöffnet, indem die vier druckseitigen Schaltöffnungen 54c, welche um 90° versetzt zueinander angeordnet sind, mit den vier druckseitigen Anschlussöffnungen 50 durch entsprechende Winkelstellung des Ventilelementes 18 zur Deckung gebracht sind. So fördert das Laufrad 14 in alle vier Druckanschlüsse.

Fig. 11d zeigt eine weitere Schaltstellung, in welcher lediglich drei der Druckanschlüsse 38, 40, 42 und 44, nämlich die drei Druckanschlüsse 38, 40 und 44 geöffnet sind. In dieser Schaltstellung bzw. Winkellage des Ventilelementes 18 sind die drei druckseitigen Schaltöffnungen 54d zur Deckung mit den druckseitigen Anschlussöffnungen 50 der Druckanschlüsse 38, 40 und 44 gebracht. Dazu sind die drei druckseitigen Schaltöffnungen 54d jeweils um 90° versetzt zueinander angeordnet, so dass im Unterteil 20 an der zugehörigen vierten 90° Position keine druckseitige Schaltöffnung ausgebildet ist und so an dieser Stelle die vierte verbleibende druckseitige Anschlussöffnung 50 vom Boden des Unterteils 20 überdeckt und verschlossen wird. Es ist zu verstehen, dass durch Drehung des Ventilelementes 18 um jeweils 90° auch die drei anderen möglichen Kombinationen, jeweils drei der Druckanschlüsse 38, 40, 42 und 44 zu öffnen, über die druckseitigen Schaltöffnungen 54d realisiert werden könnte.

Fig. 11e zeigt eine weitere Schaltstellung, in welcher zwei nebeneinander liegende Druckanschlüsse gleichzeitig geöffnet sind. Dazu sind in dem Ventilelement 18 zwei weitere druckseitige Schaltöffnungen 54e ausgebildet, welche um 90° zueinander versetzt sind. Auch hier sind an den zwei verbleibenden zugehörigen 90° Winkelpositionen im Unterteil 20 keine entsprechenden druckseitigen Schaltöffnungen ausgebildet, so dass in dieser Stellung die zwei verbleibenden druckseitigen Anschlussöffnungen 50 verschlossen sind. In der in Fig. 11e gezeigten Schaltstellung liegen die druckseitigen Schaltöffnungen 54e über den druckseitigen Anschlussöffnungen 50 der Druckanschlüsse 38 und 40. Durch Drehung des Ventilelementes 18 um jeweils 90° können auch die drei anderen möglichen Kombinationen von nebeneinanderliegenden Druckanschlüssen über die druckseitigen Schaltöffnungen 54e geöffnet werden. Es ist zu erkennen, dass durch entsprechende Winkelstellung des Ventilelementes 18 alle möglichen Kombinationen der vier Druckanschlüsse 38, 40, 42, 44 einzeln und in Kombination geöffnet werden können. So wird ein sehr einfaches Verteilerventil geschaffen, welches nur einen einzigen Antrieb benötigt und darüber hinaus direkt in das Pumpengehäuse 12 integriert werden kann. In dem gezeigten Beispiel sind die Schaltöffnungen 54 in einem Raster von 18°-Schritten angeordnet, so dass die verschiedenen Schaltstellungen durch Drehung des Ventilelementes 18 in Schritten von 18° oder einem Vielfachen von 18° gewechselt werden können. Auch bei diesem dritten Ausführungsbeispiel erfolgt der Antrieb des Ventilelementes 18 über einen Schrittmotor 34, wie es oben anhand des ersten Ausführungsbeispiels beschrieben wurde. Auch die Verteilereinrichtung gemäß dem dritten Ausführungsbeispiel kann in Kombination mit einem Umwälzpumpenaggregat realisiert werden oder auch getrennt von einem Umwälzpumpenaggregat entsprechend dem zweiten Ausführungsbeispiel gemäß Fig. 9.

### Bezugszeichenliste

- 1: Pumpenaggregat
- 2: Motorgehäuse
- 4: Stator
- 6: Rotor
- 8: Rotorwelle
- 10: Spaltrohr
- 12: Ventilgehäuse bzw. Pumpengehäuse
- 14: Laufrad
- 16: Elektronikgehäuse
- 17: Steuereinrichtung
- 18: Ventilelement
- 20: Unterteil
- 22: Deckel
- 24: Saugöffnung
- 26: Saugmund
- 28: Druckraum
- 30: Deckscheibe
- 32: Welle
- 34: Verstellmotor
- 36a, 36b: Sauganschlüsse
- 38, 40, 42: Druckanschlüsse
- 48a, 48b: saugseitige Anschlussöffnungen
- 50: Anschlussöffnungen
- 52: Drucköffnung
- 54: druckseitige Schaltöffnung
- 56a, 56b: saugseitige Schaltöffnungen
- 58: äußere Ringöffnung
- 60: innere Ringöffnung
- 62: Steuerscheibe
- 64: Wärmequelle
- 66, 68: Heizkreise
- 70: Sekundärwärmetauscher
- 80: Deckel
- 82: Sauganschluss
- 84: Druckanschluss
- X: Drehachse

## Patentansprüche

1. Heizungsverteiler-Ventilbaugruppe mit zumindest zwei Ausgängen (38, 40, 42, 44), einem in die Heizungsverteiler-Ventilbaugruppe integriertem Umwälzpumpenaggregat (1) zur Förderung eines Wärmeträgers durch die zumindest zwei Ausgänge (38, 40, 42, 44) und einer Verteilereinrichtung, welche dazu ausgebildet ist, die zumindest zwei Ausgänge (38, 40, 42, 44) wahlweise zu öffnen und zu schließen,
**gekennzeichnet durch** zumindest zwei Eingänge (36) sowie eine Mischeinrichtung, welche dazu ausgebildet ist, Strömungen aus den beiden Eingängen (36) in variablem Mischungsverhältnis zu mischen, wobei die Mischeinrichtung und die Verteilereinrichtung einen gemeinsamen Aktuator (34) zur Veränderung einer Einstellung der Mischeinrichtung sowie zum Öffnen und Schließen der zumindest zwei Ausgänge aufweisen.

2. Heizungsverteiler-Ventilbaugruppe nach Anspruch 1, **gekennzeichnet durch** zumindest eine Strömungsverbindung zwischen den beiden Eingängen (36) und den Ausgängen (38, 40, 42, 44).

3. Heizungsverteiler-Ventilbaugruppe nach einem der vorangehenden Ansprüche, **dadurch gekennzeichnet, dass** die Mischeinrichtung und/oder die Verteilereinrichtung zumindest ein bewegliches Ventilelement (18) aufweisen, welche von dem Aktuator (34) bewegbar sind.

4. Heizungsverteiler-Ventilbaugruppe nach einem der vorangehenden Ansprüche, **dadurch gekennzeichnet, dass** die Mischeinrichtung und die Verteilereinrichtung zumindest ein gemeinsames Ventilelement (18) aufweisen, welches sowohl dem Öffnen und Schließen der zumindest zwei Ausgänge (38, 40, 42, 44) als auch der Veränderung des Mischungsverhältnisses dient und durch den Aktuator (34) bewegbar ist.

5. Heizungsverteiler-Ventilbaugruppe nach Anspruch 4, **dadurch gekennzeichnet, dass** das Ventilelement (18) derart ausgebildet und von dem Aktuator (34) antreibbar ist, dass es zur Veränderung des Mischungsverhältnisses eine erste Bewegung und zu einer Veränderung eines Öffnungszustandes der Ausgänge eine zweite Bewegung ausführt.

6. Heizungsverteiler-Ventilbaugruppe nach Anspruch 5, **dadurch gekennzeichnet, dass** das Ventilelement derart ausgebildet und von dem Aktuator antreibbar ist, dass die erste und zweite Bewegung in unterschiedliche Richtungen erfolgen und/oder unterschiedliche Weglängen haben.

7. Heizungsverteiler-Ventilbaugruppe nach Anspruch 6, **dadurch gekennzeichnet, dass** eine zweite Weglänge, um welche das Ventilelement (18) zwischen zwei Schaltstellungen für die zweite Bewegung zu bewegen ist, größer ist als eine erste Weglänge, um welche das Ventilelement (18) für die erste Bewegung zwischen zwei Endpositionen zur Veränderung des Mischungsverhältnisses zu bewegen ist, wobei vorzugsweise die erste Weglänge derart kürzer ist, dass die die erste Bewegung nicht zu einer Veränderung der den Öffnungszustand der Ausgänge (38, 40, 42, 44) definierenden Schaltstellung führt.

8. Heizungsverteiler-Ventilbaugruppe nach einem der Ansprüche 3 bis 7, **dadurch gekennzeichnet, dass** die zumindest zwei Ausgänge (38, 40, 42, 44) jeweils an einer Ausgangs-Anschlussöffnung (50) enden und in dem Ventilelement (18) zumindest eine Ausgangs-Schaltöffnung (54) vorhanden sind, welche durch Bewegung des Ventilelementes (18) durch den Aktuator (34) mit den Ausgangs-Anschlussöffnungen (50) in verschiedenen Schaltstellungen unterschiedlich zur Deckung bringbar sind.

9. Heizungsverteiler-Ventilbaugruppe nach einem der Ansprüche 3 bis 8, **dadurch gekennzeichnet, dass** die beiden Eingänge (36) an jeweils einer Eingangs-Anschlussöffnung (48) enden und in dem Ventilelement Eingangs-Schaltöffnungen (56) vorhanden sind, welche durch Bewegung des Ventilelementes (18) durch den Aktuator (34) mit den Eingangs-Anschlussöffnungen (48) unterschiedlich zur Deckung bringbar sind.

10. Heizungsverteiler-Ventilbaugruppe nach einem der Ansprüche 3 bis 9, **dadurch gekennzeichnet, dass** die beiden Eingänge (36) an jeweils einer Eingangs-Anschlussöffnung (48) und/oder die zumindest zwei Ausgänge (38, 40, 42, 44) jeweils an einer Ausgangs-Anschlussöffnung (50) enden und das Ventilelement (18) Dichtflächen aufweist, welche durch Bewegung des Ventilelementes (18) durch den Aktuator (34) mit den Eingangs-Anschlussöffnungen (48) und den Ausgangs-Anschlussöffnungen (50) unterschiedlich zur Deckung bringbar sind.

11. Heizungsverteiler-Ventilbaugruppe nach einem der Ansprüche 8 bis 10, **dadurch gekennzeichnet, dass** das Ventilelement (18) zumindest eine Eingangs-Schaltöffnung (56) aufweist, welche so ausgebildet ist, dass sie abhängig von einer Positionierung des Ventilelementes (18) die Eingangs-Anschlussöffnungen (48) unterschiedlich überdeckt, wobei vorzugsweise eine Veränderung der Positionierung innerhalb einer Schaltstellung möglich ist.

12. Heizungsverteiler-Ventilbaugruppe nach einem der Ansprüche 8 bis 11, **dadurch gekennzeichnet, dass** das Ventilelement (18) zumindest zwei Gruppen (54a, 54b, 54c, 54d) von Ausgangs-Schaltöffnungen (54) aufweist, welche so ausgebildet und angeordnet sind, dass in einer ersten Schaltstellung zumindest eine Ausgangs-Schaltöffnung (54) aus einer ersten Gruppe (54a) eine Ausgangs-Anschlussöffnung (50) überdeckt und in einer zweiten Schaltstellung eine oder mehrere Ausgangs-Schaltöffnungen (54) aus einer zweiten Gruppe (54b, 54c, 54d) eine oder mehrere Ausgangs-Anschlussöffnungen (50) überdeckt.

13. Heizungsverteiler-Ventilbaugruppe nach einem der vorangehenden Ansprüche, **dadurch gekennzeichnet, dass** der gemeinsame Aktuator ein Elektromotor und insbesondere ein Schrittmotor (34) ist.

14. Heizungsverteiler-Ventilbaugruppe nach Anspruch 13, **dadurch gekennzeichnet, dass** als Aktuator der Antriebsmotor des Umwälzpumpenaggregates genutzt wird.

## Claims

1. A heating distributor valve assembly with at least two outlets (38, 40, 42, 44), with a circulation pump assembly (1) which is integrated into the heating distributor valve assembly for delivering a heat transfer medium through the at least two outlets (38, 40, 42, 44) and with a distributor device which is designed to selectively open and close at least two outlets (38, 40, 42, 44),
**characterised by** at least two inlets (36) as well as a mixing device which is designed to mix flows from the two inlets (36) in a variable mixing ratio, wherein the mixing device and the distributor device comprise a common actuator (34) for changing the adjustment of the mixing device as well as for opening and closing the at least two outlets.

2. A heating distributor valve assembly according to claim 1, **characterised by** at least one flow connection between the two inlets (36) and the outlets (38, 40, 42, 44).

3. A heating distributor valve assembly according to one of the preceding claims, **characterised in that** the mixing device and/or the distributor device comprise at least one movable valve element (18) which is movable by the actuator (34).

4. A heating distributor valve assembly according to one of the preceding claims, **characterised in that** the mixing device and the distributor device comprise at least one common valve element (18) which serves for the opening and closure of the at least two outlets (38, 40, 42, 44) as well as for the change of the mixing ratio and is movable by the actuator (34).

5. A heating distributor valve assembly according to claim 4, **characterised in that** the valve element (18) is designed and can be driven by the actuator (34), in manner such that for changing the mixing ratio it executes a first movement and for a change of the opening condition of the outlets executes a second movement.

6. A heating distributor valve assembly according to claim 5, **characterised in that** the valve element is designed and can be driven by the actuator, in a manner such that the first and second movement are effected in different directions and/or have different path lengths

7. A heating distributor valve assembly according to claim 6, **characterised in that** a second path length, by which the valve element (18) is to be moved between two switching positions in the second movement is larger than a first path length, by which the valve element (18) is to be moved in the first movement between two end positions for changing the mixing ratio, wherein the first path length is preferably shorter to the extent that the first movement does not lead to a change of the switching position which defines the opening condition of the outlets (38, 40, 42, 44).

8. A heating distributor valve assembly according to one of the claims 3 to 7, **characterised in that** the at least two outlets (38, 40, 42, 44) each end at an outlet branch opening (50) and at least one outlet switching opening (54) which can be brought to overlap with the outlet branch openings (50) to a different extent in different switching positions by way of movement of the valve element (18) by the actuator (34) is present in the valve element (18).

9. A heating distributor valve assembly according to one of the claims 3 to 8, **characterised in that** the two inlets (36) each end at an inlet branch opening (48) and inlet switching openings (56) which can be brought to overlap with the inlet branch openings (48) to a different extent by way of movement of the valve element (18) by the actuator (34) are present in the valve element.

10. A heating distributor valve assembly according to one of the claims 3 to 9, **characterised in that** the two inlets (36) each end at an inlet branch opening (48) and/or the at least two outlets (38, 40, 42, 44) each end at an outlet branch opening (50) and the valve element (18) comprises sealing surfaces which can be brought to overlap with the inlet branch openings (48) and the outlet branch openings (50) to a different extent by way of movement of the valve element (18) by the actuator (34).

11. A heating distributor valve assembly according to one of the claims 8 to 10, **characterised in that** the valve element (18) comprises at least one inlet switching opening (56) which is designed such that it covers the inlet branch openings (48) to a different extent depending on a positioning of the valve element (18), wherein preferably a change of the positioning is possible within a switching position.

12. A heating distributor valve assembly according to one of the claims 8 to 11, **characterised in that** the valve element (18) comprises at least two groups (54a, 54b, 54c, 54d) of outlet switching openings (54) which are designed and arranged such that in a first switching position, at least one outlet switching opening (54) from a first group (54a) covers an outlet branch opening (50) and in a second switching position, one or more outlet switching opening (54) from a second group (54b, 54c, 54d) covers one or more outlet branch openings (50).

13. A heating distributor valve assembly according to one of the preceding claims, **characterised in that** the common actuator is an electric motor and in particular a stepper motor (34).

14. A heating distributor valve assembly according to claim 13, **characterised in that** the drive motor of the circulation pump assembly is used as an actuator.

## Revendications

1. Ensemble vanne pour répartiteur de chauffage, comprenant au moins deux sorties (38, 40, 42, 44), un groupe de pompage de circulation (1) intégré à l'ensemble vanne pour répartiteur de chauffage et permettant le transport d'un fluide caloporteur à travers lesdits au moins deux sorties (38, 40, 42, 44) et un dispositif de répartition conçu pour ouvrir et fermer de manière optionnelle lesdits au moins deux sorties (38, 40, 42, 44),
**caractérisé par** au moins deux entrées (36) et un dispositif de mélange conçu pour mélanger des flux provenant des deux entrées (36) selon un rapport de mélange variable, le dispositif de mélange et le dispositif de répartition comprenant un actionneur commun (34) permettant de modifier un réglage du dispositif de mélange et d'ouvrir et fermer lesdits au moins deux sorties.

2. Ensemble vanne pour répartiteur de chauffage selon la revendication 1, **caractérisé par** au moins une liaison fluidique entre les deux entrées (36) et les sorties (38, 40, 42, 44).

3. Ensemble vanne pour répartiteur de chauffage selon l'une quelconque des revendications précédentes, **caractérisé en ce que** le dispositif de mélange et/ou le dispositif de répartition comprend/comprennent au moins un élément de vanne (18) mobile pouvant être déplacé par l'actionneur (34).

4. Ensemble vanne pour répartiteur de chauffage selon l'une quelconque des revendications précédentes, **caractérisé en ce que** le dispositif de mélange et le dispositif de répartition comprennent au moins un élément de vanne (18) commun servant aussi bien à l'ouverture et la fermeture desdits au moins deux sorties (38, 40, 42, 44) qu'à la modification du rapport de mélange et pouvant être déplacé grâce à l'actionneur (34).

5. Ensemble vanne pour répartiteur de chauffage selon la revendication 4, **caractérisé en ce que** l'élément de vanne (18) est conçu et peut être entraîné par l'actionneur (34) de telle manière que, pour modifier le rapport de mélange, un premier déplacement est effectué et que, pour modifier un état d'ouverture des sorties, un deuxième déplacement est effectué.

6. Ensemble vanne pour répartiteur de chauffage selon la revendication 5, **caractérisé en ce que** l'élément de vanne est conçu et peut être entraîné par l'actionneur de telle manière que les premier et second déplacements se font dans des directions différentes et/ou présentent des longueurs de trajet différentes.

7. Ensemble vanne pour répartiteur de chauffage selon la revendication 6, **caractérisé en ce qu'**une seconde longueur de trajet sur laquelle l'élément de vanne (18) doit être déplacé entre deux positions de commutation en vue du second déplacement est supérieure à une première longueur de trajet sur laquelle l'élément de vanne (18) doit être déplacé entre deux positions terminales en vue du premier déplacement afin de modifier le rapport de mélange, dans lequel la première longueur de trajet est de manière préférée plus courte de telle manière que le premier déplacement ne provoque pas une modification de la position de commutation définissant l'état d'ouverture des sorties (38, 40, 42, 44).

8. Ensemble vanne pour répartiteur de chauffage selon l'une quelconque des revendications 3 à 7, **caractérisé en ce que** lesdits au moins deux sorties (38, 40, 42, 44) se terminent respectivement à un orifice de raccordement de sortie (50) et **en ce que**, dans l'élément de vanne (18), il y a au moins un orifice de commutation de sortie (54) pouvant être mis en coïncidence de manière différente avec les orifices de raccordement de sortie (50) dans différentes positions de commutation grâce au déplacement de l'élément de vanne (18) par l'actionneur (34).

9. Ensemble vanne pour répartiteur de chauffage selon l'une quelconque des revendications 3 à 8, **caractérisé en ce que** les deux entrées (36) se terminent respectivement à un orifice de raccordement d'entrée (48) et **en ce que** des orifices de commutation d'entrée (56) pouvant être mis en coïncidence de manière différente avec les orifices de raccordement d'entrée (48) grâce au déplacement de l'élément de vanne (18) par l'actionneur (34) sont présents dans l'élément de vanne.

10. Ensemble vanne pour répartiteur de chauffage selon l'une quelconque des revendications 3 à 9, **caractérisé en ce que** les deux entrées (36) se terminent respectivement à un orifice de raccordement d'entrée (48) et/ou lesdits au moins deux sorties (38, 40, 42, 44) se terminent respectivement à un orifice de raccordement de sortie (50) et l'élément de vanne (18) comprend des surfaces d'étanchéité pouvant être mises en coïncidence de manière différente avec les orifices de raccordement d'entrée (48) et les orifices de raccordement de sortie (50) grâce au déplacement de l'élément de vanne (18) par l'actionneur (34).

11. Ensemble vanne pour répartiteur de chauffage selon l'une quelconque des revendications 8 à 10, **caractérisé en ce que** l'élément de vanne (18) comprend au moins un orifice de commutation d'entrée (56) conçu de sorte qu'il recouvre de manière différente les orifices de raccordement d'entrée (48) en fonction d'un positionnement de l'élément de vanne (18), une modification du positionnement à l'intérieur d'une position de commutation étant possible de manière préférée.

12. Ensemble vanne pour répartiteur de chauffage selon l'une quelconque des revendications 8 à 11, **caractérisé en ce que** l'élément de vanne (18) comprend au moins deux groupes (54a, 54b, 54c, 54d) d'orifices de commutation de sortie (54) conçus et agencés de sorte que, dans une première position de commutation, au moins un orifice de commutation de sortie (54) d'un premier groupe (54a) recouvre un orifice de raccordement de sortie (50) et, dans une seconde position de commutation, un ou plusieurs orifice(s) de commutation de sortie (54) d'un second groupe (54b, 54c, 54d) recouvre(nt) un ou plusieurs orifice(s) de raccordement de sortie (50).

13. Ensemble vanne pour répartiteur de chauffage selon l'une quelconque des revendications précédentes, **caractérisé en ce que** l'actionneur commun est un moteur électrique et en particulier un moteur pas à pas (34).

14. Ensemble vanne pour répartiteur de chauffage selon la revendication 13, **caractérisé en ce que** le moteur d'entraînement du groupe de pompage de circulation est utilisé en tant qu'actionneur.
